# FASCICULE DE BREVET EUROPEEN

(11) **EP 3 154 842 B1**
(45) Date de publication et mention de la délivrance du brevet: **12.12.2018**
(21) Numéro de dépôt: 15733799.9
(22) Date de dépôt: 04.06.2015
(51) Int. Cl.: B62D 21/15

(54) **PARTIE AVANT DE LA STRUCTURE D'UN VEHICULE AUTOMOBILE**
VORDERTEIL FÜR DIE STRUKTUR EINES KRAFTFAHRZEUGS
FRONT PORTION OF THE STRUCTURE OF A MOTOR VEHICLE

(30) Priorité: 10.06.2014 FR 1455250
(43) Date de publication de la demande: 19.04.2017
(73) Titulaire: Renault S.A.S., 92100 Boulogne-Billancourt (FR)
(72) Inventeur: BEZEAULT, Loic, 78000 Versailles (FR); DUHEM, Xavier, 92130 Issy Les Moulineau (FR)
(86) Numéro de dépôt international: PCT/FR2015/051482
(87) Numéro de publication internationale: WO 2015/189503

(56) Documents cités:
- EP-A1- 0 655 565
- EP-A1- 2 380 782
- FR-A1- 2 866 619
- FR-A1- 2 936 469

## Description

### Domaine de l'invention :

La présente invention concerne une partie avant de la structure d'un véhicule automobile comprenant un ensemble structurel interposé suivant la direction longitudinale du véhicule entre au moins une traverse avant et un tablier de fermeture de l'habitacle du véhicule. Cette partie avant est communément désignée « bloc avant » par l'homme de l'art.

### Etat de la technique :

La partie avant ou le bloc avant de la structure d'un véhicule est soumise à des contraintes d'architecture sévères, qui doivent prendre en compte l'architecture du groupe motopropulseur (GMP), l'architecture des équipements de liaison au sol (suspension, amortisseurs, direction) et l'architecture de carrosserie de la façade avant. Cette même zone est également soumise à de nombreuses contraintes de prestations du véhicule en matière de chocs, vibrations, acoustique, endurance etc.

La conception de nouveaux véhicules intègre des objectifs d'allégement de plus en plus ambitieux afin de limiter ou réduire significativement la consommation. Plus les véhicules sont légers, plus il est possible de prévoir un groupe motopropulseur de moindre puissance. Cette démarche permet de réduire la taille des moteurs, ce qui permet de réduire en conséquence les dimensions du bloc avant.

Cependant les véhicules doivent également satisfaire des exigences sévères en termes de sécurité passive et de tenue au choc. Lors d'un choc frontal, le bloc avant du véhicule est fortement sollicité dans le but d'obtenir la meilleure absorption d'énergie et le meilleur passage des efforts : ainsi l'énergie doit être absorbée au maximum dans la partie située en avant de l'habitacle, tout en limitant les intrusions dans l'habitacle proprement dit, ceci devant être obtenu pendant un temps très court correspondant typiquement à un choc. Pour résoudre cette difficulté et obtenir ce comportement, on combine des zones fusibles, des zones plus raides et des pièces aux dimensions adaptées pour optimiser l'absorption d'énergie (absorbeurs ou « crash-box » selon le terme anglais, privilégiant des pliages de pièces).

On note en outre que les structures de blocs avant de véhicules sont classiquement réalisées par l'assemblage d'un grand nombre de pièces métalliques, qui impactent fortement le poids du véhicule ce qui est pénalisant pour les performances en consommation comme évoqué ci-dessus. Cet assemblage de pièces multiples augmente également les coûts de fabrication et d'assemblage.

En outre on connait les documents FR2 936 469 A1 et EP 2 380 782 A1 décrivant des structures avant de véhicule automobile comprenant un ensemble structurel et une traverse avant, l'ensemble comprenant deux coques accolées l'une à l'autre et conformées pour définir de chaque côté du véhicule un raidisseur avec la forme générale d'un manchon creux s'étendant suivant la direction longitudinale du véhicule, chaque raidisseur étant à une extrémité en appui contre la traverse par des moyens non optimisés.

### But de l'invention :

L'invention a pour but de concilier les contraintes de poids et d'architecture compacte (pour un GMP compact), une capacité d'absorption maximale en cas de choc et un assemblage simple.

### Objet de l'invention :

A cet effet, l'invention a pour objet une partie avant de la structure d'un véhicule automobile comprenant un ensemble structurel et au moins une traverse avant, caractérisée en ce que l'ensemble structurel comprend au moins une coque extérieure et au moins une coque intérieure accolées l'une à l'autre, les coques étant conformées pour définir, de chaque côté du véhicule, au moins un raidisseur ayant la forme générale d'un manchon creux s'étendant sensiblement suivant la direction longitudinale du véhicule, chaque raidisseur étant fermé, à une extrémité en appui contre la traverse avant, par une première extension issue de l'une des deux coques le définissant, une deuxième extension issue de l'autre des deux coques le définissant étant superposée au moins en partie à la première extension, lesdites extensions comprenant des moyens de fixation à ladite traverse avant, les parties superposées desdites première et deuxième extensions s'étendant dans un plan sensiblement perpendiculaire ou perpendiculaire à la direction longitudinale du véhicule et étant fixées à la traverse avant par des vis de fixation enfilées dans des orifices traversant les parties superposées des première et deuxième extensions. Autrement dit, l'assemblage d'une coque intérieure et d'une coque extérieure forme un manchon longitudinal creux. Ainsi, les coques sont assemblées le long de bords s'étendant suivant la direction longitudinale du véhicule, lorsque la partie avant de la structure fait partie du véhicule. En particulier, dans un mode de réalisation, la surface de jonction de deux coques intérieure et extérieure s'étend suivant une direction sensiblement verticale et longitudinale du véhicule.

L'agencement particulier de l'ensemble structurel, notamment de ses raidisseurs, au niveau de sa jonction avec une traverse, présente de nombreux avantages. La fixation et le montage de l'ensemble structurel sur une traverse avant sont simplifiés du fait de l'intégration de zones de fixation aux coques intérieure et extérieure formant l'ensemble structurel. La réalisation des première et deuxième extensions est également simple, notamment lorsque l'ensemble structurel est réalisé en matériau composite, en particulier par moulage. La conception des coques intérieure et extérieure, et par conséquent de l'ensemble structurel, est ainsi simplifiée.

Par ailleurs, la partie avant est constituée d'un ensemble structurel ayant un nombre de pièces significativement réduit et optimisé au regard d'une partie avant classique de l'état de l'art constituée d'éléments métalliques. En outre, la structure et géométrie sont parfaitement optimisées pour l'emploi de matériaux composites offrant un gain de poids substantiel.

Un tel ensemble structurel est destiné à être interposé suivant la direction longitudinale du véhicule entre ladite au moins une traverse avant et un tablier de fermeture de l'habitacle du véhicule. Chaque raidisseur forme ainsi une voie de transmission et d'absorption d'effort entre une extrémité correspondante de la traverse avant et le tablier.

Les première et deuxième extensions peuvent éventuellement toutes les deux fermer un raidisseur, se superposant alors sur toute leur surface. Cet agencement n'est toutefois pas préféré.

Avantageusement, les parties superposées desdites première et deuxième extensions peuvent s'étendre en dehors du raidisseur. Ceci permet de faciliter les opérations de fixation de l'ensemble structurel à la traverse.

En particulier, ces parties superposées peuvent s'étendre en dehors du raidisseur, du côté de ladite au moins une coque extérieure, autrement dit en dehors de l'ensemble structurel, ce qui permet de faciliter davantage les opérations de fixation.

Selon l'invention, une traverse avant est fixée à l'élément structurel par les première et deuxième extensions fermant chaque raidisseur. Autrement dit, ces extensions sont en appui contre la traverse à laquelle elles sont fixées.

En fonction de la forme de la traverse, les parties superposées desdites première et deuxième extensions peuvent alors s'étendre dans un plan sensiblement perpendiculaire ou perpendiculaire à la direction longitudinale (X) du véhicule. Par un plan sensiblement perpendiculaire, on entend un plan formant un angle d'au plus ±20°, voire d'au plus 10° ou d'au plus 5° avec un plan perpendiculaire à la direction longitudinale (X). Ainsi, ces parties superposées peuvent être inclinées par rapport à un plan perpendiculaire à la direction longitudinale du véhicule. Ainsi, ces première et deuxième extensions peuvent être facilement adaptées à la forme de la traverse avant, laquelle peut présenter une courbure, aussi bien en inclinaison, qu'en surface de la partie de ces extensions en appui sur la traverse. Avantageusement, les moyens de fixation peuvent comprendre au moins un orifice traversant les parties superposées desdites première et deuxième extensions, ledit orifice recevant une vis de fixation en prise avec un écrou solidaire de l'extension la plus éloignée de la traverse. Les deux extensions sont ainsi maintenues l'une contre l'autre par le serrage de la vis de fixation, laquelle assure la fixation des deux extensions à la traverse. Cet agencement présente l'avantage d'être simple à mettre en oeuvre et résistant. De préférence, deux orifices et deux vis de fixation peuvent être prévus.

L'écrou peut être fixé ou intégré à l'extension ou peut être fixé ou intégré à une plaque de fixation solidarisée à cette extension. Une telle plaque de fixation, métallique ou en matériau composite, présente l'avantage de renforcer la fixation. Cette plaque de fixation peut être solidarisée à l'extension, par exemple par collage, ou être intégrée à l'extension, par exemple lors de la réalisation de celle-ci, notamment par moulage. Une telle plaque de fixation peut en outre être facilement réalisée en grandes quantités.

Une vis de fixation assurant l'assemblage de la traverse aux extensions peut être vissée depuis une face externe de la traverse, autrement dit une face dirigée vers l'avant du véhicule et non vers l'élément structurel, la traverse comportant de simples trous la traversant entièrement à cet effet.

Toutefois, avantageusement, ladite traverse peut former un corps creux comprenant une face externe et une face interne en appui contre les raidisseurs et ladite vis de fixation peut solidariser ladite face interne aux parties superposées des première et deuxième extensions, ladite face externe de la traverse comportant un orifice pour le passage et le vissage de ladite vis de fixation. Les vis de fixation sont alors disposées à l'intérieur du corps creux de la traverse, ce qui peut permettre un meilleur positionnement de la traverse par rapport à l'élément structurel.

En variante ou en combinaison avec ce qui précède, d'autres avantages et caractéristiques de l'invention peuvent être considérés isolément ou en combinaison :
- l'ensemble structurel peut être réalisé en matériau composite, à base d'une matrice en résine thermodurcissable ou thermoplastique et d'un renfort en fibres de verre ou de carbone,
- l'ensemble structurel peut comprendre d'une part deux coques extérieures gauche et droite, et d'autre part deux coques intérieures gauche et droite, les coques étant assemblées deux par deux à gauche et à droite pour former un sous-ensemble de coques extérieure et intérieur gauche et un sous-ensemble de coque extérieur et intérieur droit,
- les coques de chaque sous ensemble gauche et droit peuvent être conformées pour définir, de chaque côté du véhicule, au moins un raidisseur supérieur et un raidisseur inférieur ayant chacun la forme générale d'un manchon s'étendant sensiblement suivant la direction longitudinale du véhicule, les raidisseurs supérieurs et inférieurs formant des voies de transmission et d'absorption d'effort respectivement supérieure et inférieure entre d'une part des extrémités correspondantes d'une traverse avant supérieure et d'une traverse avant inférieure, et d'autre part le tablier,
- les sous-ensembles de coques gauche et droit peuvent comprendre chacun un corps principal ayant la forme générale d'une paroi sensiblement verticale dans laquelle sont conformés les raidisseurs supérieur et inférieur, les sous-ensembles étant chacun pourvus à leur base d'extensions se raccordant sensiblement dans une zone médiane du véhicule, considéré suivant la direction transversale, ces extensions formant des entretoises ou éléments transversaux s'étendant sensiblement suivant la direction transversale du véhicule,
- les raidisseurs supérieurs peuvent être chacun fixés dans leur partie arrière à une zone d'appui médiane du tablier située dans la demi-moitié inférieure de celui-ci, considéré suivant la direction verticale, ces raidisseurs supérieurs surplombant les raidisseurs inférieurs fixés chacun à une zone d'appui inférieure du tablier située sensiblement au niveau d'un plancher de la structure du véhicule,
- chaque raidisseur supérieur peut comporter une partie arrière creuse emmanchée sur un plot correspondant conformé sur la zone d'appui médiane du tablier, des moyens de fixation additionnels notamment par vissage étant prévus pour solidariser le raidisseur supérieur et le plot correspondant,
- les extensions raccordant les sous-ensembles de coques gauche et droit peuvent comprendre une entretoise centrale s'étendant sensiblement horizontalement ainsi qu'un élément transversal arrière ayant la forme générale d'une cornière à section en L dont une première branche s'étend sensiblement horizontalement et une seconde branche s'étend sensiblement verticalement, ces extensions étant formées par la superposition des coques extérieure et intérieure,
- une partie au moins des raidisseurs supérieurs et inférieurs a la forme générale d'un manchon s'évasant de l'avant vers l'arrière,
- les coques intérieure et extérieure peuvent être fixées par collage, par laser ou induction ou encore par des moyens de fixation positive, du type vis-écrou, rivet ou équivalent,
- au moins l'une des traverses avant supérieure et inférieure peut être métallique,
- au moins l'une des traverses avant supérieure et inférieure peut être réalisée en matériau composite à base d'une matrice en résine thermodurcissable ou thermoplastique et d'un renfort en fibres de verre ou de carbone,
- l'épaisseur des coques peut être comprise entre 2 et 5mm, et est en particulier de 3,5mm.

L'invention a également pour objet un véhicule automobile comprenant une partie avant de structure selon l'une quelconque des caractéristiques précédentes.

### Exposé de l'invention :

L'invention sera mieux comprise à la lecture de la description suivante d'un exemple non limitatif de l'invention, et à la lumière des dessins annexés sur lesquels :
- la figure 1 représente une vue en perspective d'une partie avant (ou bloc avant) de la structure d'un véhicule automobile suivant l'invention illustrant l'ensemble structurel assemblé aux traverses avant, cet ensemble structurel étant disposé entre les traverses avant et le tablier (non illustré) du véhicule,
- la figure 2 représente une vue en perspective d'une coque intérieure gauche de l'ensemble structurel de la figure 1,
- la figure 3 représente une vue en perspective d'une coque extérieure gauche de l'ensemble structurel de la figure 1,
- la figure 4 représente une vue en perspective des coques intérieure et extérieure gauches des figures 2 et 3 après assemblage,
- la figure 5 est une section médiane suivant un plan YZ de la partie avant de la figure 1,
- la figure 6 est une section suivant un plan XY de la partie avant de la figure 1, au niveau d'une fixation de la traverse avant supérieure,
- la figure 7 est une vue en coupe suivant la ligne A-A de la figure 6,
- la figure 8a est une vue en perspective d'une plaque de fixation, sans écrous, la figure 8b est une vue similaire avec écrous, la figure 8c montre une vue en coupe de la figure 8b au niveau d'un écrou.

Dans le présent texte, les indications de directions et d'orientation sont données en référence à un repère classique XYZ utilisé en conception automobile, dans lequel X est la direction longitudinale du véhicule, dirigé vers l'arrière, Y la direction transversale du véhicule, dirigé vers la droite, et Z la direction verticale, dirigée vers le haut. Les notions « avant », « arrière », « gauche » et « droite » sont indiquées en relation avec l'orientation « avant-arrière » et le sens de marche classique du véhicule.

Par sensiblement horizontal, longitudinal ou vertical, on entend une direction/un plan formant un angle d'au plus ±20°, voire d'au plus 10° ou d'au plus 5° avec une direction/un plan horizontal, longitudinal ou vertical.

On a représenté sur les figures une partie avant 1 (autrement appelée « bloc avant ») selon l'invention de la structure d'un véhicule automobile. Cette partie avant est destinée à se raccorder à une partie principale de la structure du véhicule, comprenant typiquement le plancher ou soubassement du véhicule et l'habitacle qui est délimité dans sa partie avant par un tablier. Ces éléments font généralement partie de l'ensemble désigné sous le terme « caisse en blanc » et sont typiquement réalisés en tôles embouties et assemblées essentiellement par soudure. La partie avant 1 avant accueille typiquement le groupe motopropulseur (GMP) du véhicule, bien que l'invention ne soit pas réduite à cette configuration et puisse également s'appliquer à des véhicules pourvus de GMP arrière.

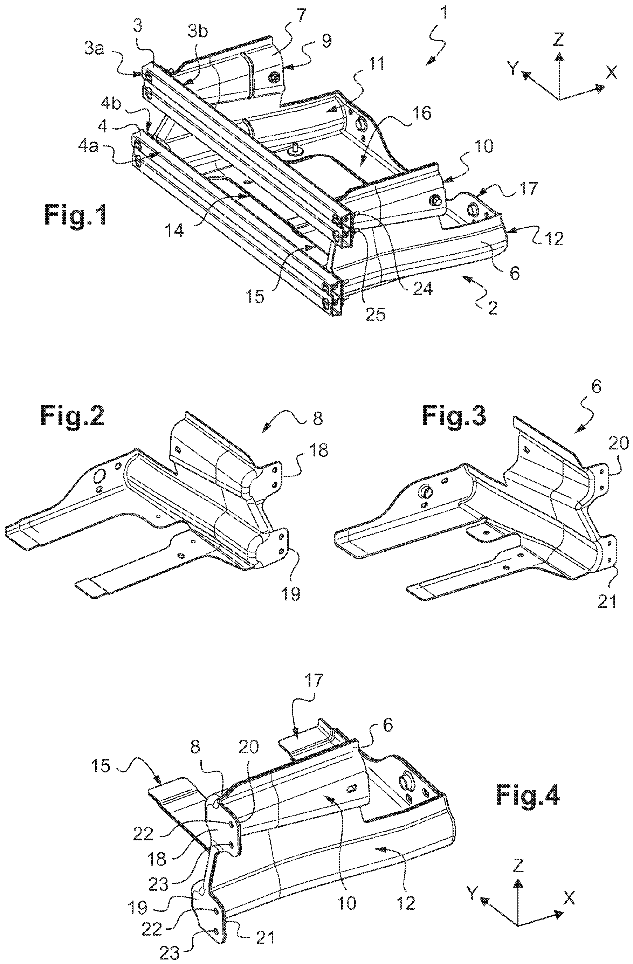

Comme représenté sur les figures 1 à 6, la partie avant 1 comprend un ensemble structurel 2 interposé suivant la direction longitudinale du véhicule entre deux traverses avant 3, 4 et le tablier de fermeture de l'habitacle du véhicule (non représenté).

L'ensemble structurel 2 est réalisé en coques de matériau composite, à base d'une matrice en résine thermodurcissable ou thermoplastique et d'un renfort en fibres de verre ou de carbone. L'épaisseur des coques est typiquement de 2 à 5mm et est en moyenne de l'ordre de 3,5mm dans l'exemple de réalisation décrit. Cette épaisseur peut être variable selon les zones de chaque coque et dépend du nombres de plis des tissus (verre ou carbone), de leur configuration locale (plis locaux, renfort ou « patch » locaux, etc.).

Les traverses avant 3, 4 s'étendent suivant la direction transversale Y. Ces traverses sont parfois désignées « traverses extrêmes avant » et sont destinées à être impactées en premier lors d'un choc frontal ou d'un choc piéton, afin de répartir les efforts tant longitudinalement que transversalement. Ces traverses comprennent une traverse supérieure 3 et une traverse inférieure 4, disposées l'une au dessus de l'autre, un espace étant ménagé entre les deux. La traverse inférieure 3 peut être légèrement avancée par rapport à la traverse supérieure 4 pour mieux répondre aux préconisations techniques relatives au choc piéton.

Le tablier auquel se fixe l'ensemble structurel dans sa partie arrière désigne une cloison structurelle de séparation de l'habitacle vis-à-vis de la partie avant 1 ou bloc avant. La partie avant 1 vient se fixer sur une face avant du tablier.

Selon l'invention illustrée par les figures 1 à 6, l'ensemble structurel 2 comprend deux coques extérieures droite 5 et gauche 6 et deux coques intérieures droite 7 et gauche 8. Les coques intérieure gauche 8 et extérieure gauche 6 sont représentées respectivement sur les figures 2 et 3. Les coques droites n'ont pas été représentées mais sont similaires, notamment symétriques des coques gauches par rapport à un plan médian XZ du véhicule.

Les coques sont assemblées et accolées deux par deux à gauche et à droite pour former un sous-ensemble de coques extérieure 6 et intérieur 8 gauche (figure 4) et un sous-ensemble de coques extérieure 5 et intérieure 7 droit. Dans un mode de réalisation de l'invention, la fixation des coques entre elles est typiquement réalisée par collage. La fixation par collage utilise par exemple une colle de type PU (polyuréthane) ou de type époxyde, ou de type cyanoacrylate. La colle peut être structurelle et/ou une colle à prise rapide (temps de réticulation rapide).

Dans d'autres modes de réalisation, on peut prévoir une fixation par laser, ou par induction ou par fixations positives (par exemple, par vis-écrous, rivets ou équivalents). Ces différents modes de fixation peuvent en outre être combinés. Chaque sous-ensemble de coques gauche 6, 8 et droit 5, 7 comprend un corps principal ayant la forme générale d'une paroi s'étendant suivant la direction longitudinale X et s'élevant suivant la direction verticale Z. Ces parois sont espacées suivant la direction transversale Y pour définir entre elles un espace accueillant des organes fonctionnels du véhicule, par exemple le GMP. En vue de dessus ou de dessous, l'ensemble structurel 2 a la forme générale d'un cadre ou rectangle orienté transversalement, dont les côtés longs sont matérialisés à l'avant par les traverses avant 3, 4, et à l'arrière par l'élément transversal 16, 17 (décrit ci-après) et dont les côtés courts sont matérialisés par les zones verticales (formant paroi) des sous-ensembles gauche 6, 8 et droit 5, 7.

Les coques extérieure et intérieure de chaque sous-ensemble gauche 6, 8 et droit 5, 7 sont conformées pour définir, de chaque côté du véhicule, des zones à sections localement élargie formant des raidisseurs. Ceux-ci sont intégrés dans la partie formant paroi des sous-ensembles de coques gauche 6, 8 et droit 5, 7. Dans l'exemple de réalisation illustré aux figures 1 à 6, on a prévu deux raidisseurs supérieurs 9, 10 et deux raidisseurs inférieurs 11, 12. Chaque sous-ensemble de coques gauche 6, 8 et droit 5, 7 comprend donc un raidisseur supérieur 9, 10 surplombant un raidisseur inférieur 11, 12.

Les raidisseurs 9-12 ont la forme générale de manchons creux s'étendant sensiblement suivant la direction longitudinale X du véhicule. Ces manchons creux sont ouverts à leur extrémité destinée à être fixée au tablier et fermés à leur extrémité destinée à être fixée à une traverse, tel qu'il sera décrit plus loin.

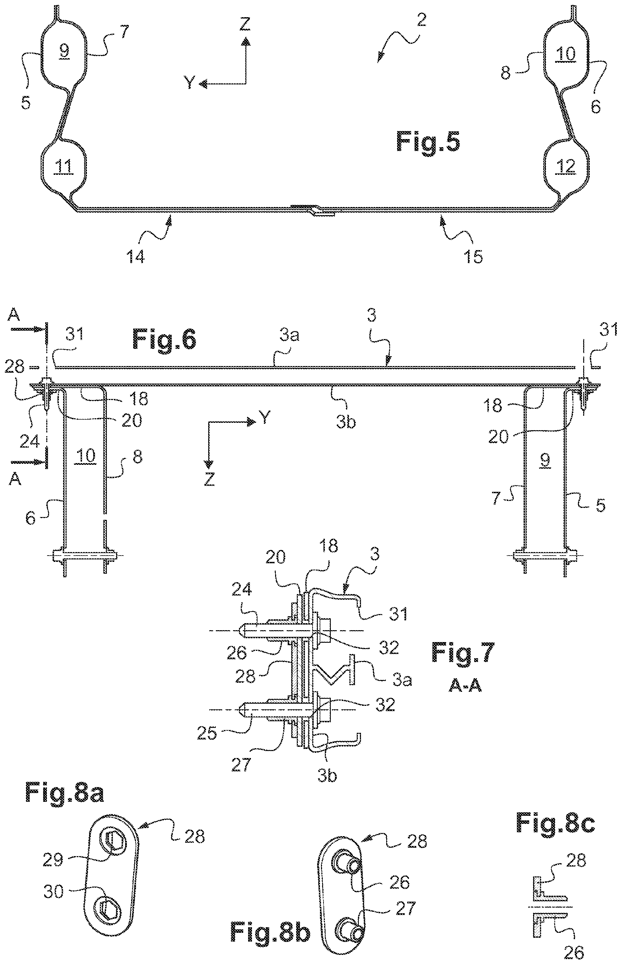

Au sein de chaque sous-ensemble de coques gauche et droit, la surface de jonction entre les coques intérieures 7, 8 et extérieures 5, 6 s'étend suivant une direction sensiblement verticale. En référence à la figure 5, on observe que les coques extérieures 5, 6 et intérieures 7, 8 ont des formes conjuguées au niveau des surfaces de jonctions de façon à être appliquées étroitement l'une contre l'autre. Ces surfaces de jonction sont interrompues localement lorsque la coque extérieure 5, 6 et la coque intérieure 7, 8 s'écartent l'une de l'autre pour former les raidisseurs 9-12. La partie jointive des coques 5, 7 ; 6, 8 située au-dessus du raidisseur supérieur 9, 10 est sensiblement verticale. La partie jointive des coques 5, 7 ; 6, 8 située entre le raidisseur supérieur 9, 10 et le raidisseur inférieur 11, 12 s'étend de façon inclinée d'environ 20 à 30° par rapport à la verticale avec une zone supérieure plus proche d'une zone médiane du véhicule tandis qu'une zone inférieure de cette partie accolée est plus éloignée de la zone médiane. On entend par zone médiane une zone définie par un plan vertical et longitudinal du véhicule formant schématiquement un plan de symétrie de la structure. Les notions « extérieur(e) » et « intérieur(e) » sont également définies en relation avec cette zone médiane : « extérieur » s'applique à un élément tourné à l'opposé de cette zone médiane tandis que « intérieur » s'applique à un élément tourné en direction de cette zone médiane ou plus proche de celle-ci.

La partie jointive des coques 5, 7 ; 6, 8 située en dessous du raidisseur inférieur 11, 12 s'étend de façon inclinée d'environ 30 à 50° par rapport à la verticale avec une zone supérieure plus éloignée d'une zone médiane du véhicule et une zone inférieure plus proche de cette zone médiane. Ces inclinaisons des parties accolées définissent l'inclinaison des plans de joint considérés localement entre la coque extérieure et la coque intérieure correspondante.

Le raidisseur supérieur 9, 10 a une section YZ inscrite dans un rectangle ayant des dimensions d'environ 125 x 71mm. Le raidisseur inférieur 11, 12 a une section YZ inscrite dans un rectangle ayant des dimensions d'environ 88 x 71mm, ces rectangles étant orientés verticalement. Ainsi la section allongée de ces raidisseurs est orientée verticalement. Le terme « inscrit » signifie que les sections des raidisseurs épousent au moins en partie les côtés de ces rectangles : les sections ont des côtés verticaux parallèles entre eux, tandis que les zones haute et basse des sections ont des formes arrondies dans lesquelles se situent les parties jointives des coques intérieure et extérieure. Les valeurs indiquées ci-dessus sont données à titre d'exemple non limitatif de l'invention, étant entendu que des valeurs s'écartant de plusieurs millimètres de ces dimensions restent inclues dans le cadre de l'invention.

Les sous-ensembles de coques côté gauche 6, 8 et côté droit 5, 7 sont symétriques par rapport au plan vertical longitudinal médian du véhicule.

Les raidisseurs supérieurs 9, 10 forment des voies de transmission et d'absorption d'effort supérieures, sensiblement suivant la direction longitudinale X, entre des extrémités de la traverse supérieure 3 et le tablier.

Les raidisseurs inférieurs 11, 12 forment des voies de transmission et d'absorption d'effort inférieures, sensiblement suivant la direction longitudinale X, entre des extrémités de la traverse inférieure 4 et le tablier.

Les sous-ensembles de coques sont chacun pourvus à leur base d'extensions 14, 15, 16, 17 se raccordant sensiblement dans une zone médiane du véhicule, considéré suivant la direction transversale Y. Ces extensions forment des entretoises ou éléments transversaux s'étendant sensiblement suivant la direction transversale Y du véhicule, depuis les bords inférieurs des sous-ensembles de coques gauche et droit. L'ensemble structurel 2 comprend une entretoise centrale 14, 15 assurant une fonction de stabilité. Elle maintient l'ensemble structurel en forme avant et pendant son montage. Cette entretoise centrale 14, 15 est formée de deux parties issues de chacun des sous-ensembles de coques gauche et droit. Chacune de ces deux parties est constituée d'une double couche de coques constituée par la superposition des coques extérieure et intérieure de chaque sous-ensemble. En référence à la figure 5, le raccordement des deux parties 14, 15 dans la zone médiane est réalisé par un recouvrement des bords libres formant d'un soyage. Les deux parties 14, 15 sont fixées l'une à l'autre par collage, dans le mode de réalisation de l'invention tel qu'illustré. Comme évoqué précédemment, selon d'autres variantes non illustrées de l'invention, la fixation peut être assurée par laser, ou induction ou fixations positives (vis-écrous, rivets ou équivalent).

Les extensions raccordant les sous-ensembles de coques gauche et droit comprennent également un élément transversal 16, 17 arrière ayant la forme générale d'une cornière à section en L dont une première branche s'étend sensiblement horizontalement et une seconde branche s'étend sensiblement verticalement. Cet ensemble transversal arrière est constitué de deux parties gauche 17 et droite 16 se raccordant sensiblement dans la zone médiane du véhicule. Chacune de ces deux parties 17, 16 est constituée d'une double couche de coques constituée par la superposition des coques extérieure et intérieure de chaque sous-ensemble. Le raccordement des deux parties 16, 17 dans la zone médiane est réalisé par un recouvrement des bords libres formant d'un soyage. Les deux parties 16, 17 sont également fixées l'une à l'autre par collage.

La fixation de l'ensemble structurel 2 est assurée sur la face avant du tablier. Les raidisseurs supérieurs 9, 10 sont chacun fixés dans leur partie arrière à une zone d'appui médiane du tablier située dans la demi-moitié inférieure de celui-ci, considéré suivant la direction verticale. Les raidisseurs inférieurs 11, 12 sont fixés chacun à une zone d'appui inférieure du tablier située sensiblement au niveau d'un plancher de la structure du véhicule (non représenté). Le tablier peut présenter une forme avancée de la zone d'appui médiane par rapport à la zone d'appui inférieure. L'extrémité arrière des raidisseurs supérieurs 9, 10 est alors plus avancée que l'extrémité arrière des raidisseurs inférieurs 11, 12, ce qui conditionne également une différence de longueurs entre les raidisseurs supérieurs et inférieurs. Le rapport des longueurs suivant la direction longitudinale X entre les raidisseurs supérieurs et inférieurs peut être de l'ordre de 60%, ce rapport étant indiqué à titre uniquement indicatif et nullement limitatif.

Chaque raidisseur supérieur 9, 10 comporte une partie arrière creuse emmanchée sur un plot correspondant (non représenté) conformé sur la zone d'appui médiane du tablier. Des moyens de fixation additionnels notamment par vissage sont prévus pour solidariser le raidisseur supérieur 9, 10 et le plot correspondant. Le vissage est typiquement effectué transversalement ou verticalement pour verrouiller le raidisseur dans sa position emmanchée sur le plot issu du tablier. Les traverses avant supérieure 3 et inférieure 4 peuvent être métalliques. Dans un autre mode de réalisation non illustré de l'invention, ces traverses 3, 4, ou au moins l'une de ces traverses, peuvent être réalisées en matériau composite à base d'une matrice en résine thermodurcissable ou thermoplastique et d'un renfort en fibres de verre ou de carbone.

Les traverses avant supérieure 3 et inférieure 4 sont fixées aux extrémités avant des raidisseurs supérieurs 9, 10 et inférieurs 11, 12, respectivement.

A cet effet, chaque raidisseur 9-12 est fermé, à une extrémité en appui contre une traverse avant 3, 4, par une première extension 18, 19 issue de l'une des deux coques le définissant, une deuxième extension 20, 21 issue de l'autre des deux coques le définissant étant superposée au moins en partie à la première extension 18, 19. Les extensions 18-21 comprennent en outre des moyens de fixation à une traverse avant 3, 4.

Ici, tel que visible plus particulièrement figures 2 à 4 pour le sous ensemble gauche 6, 8, la coque intérieure 7, 8 de chaque sous-ensemble comprend une première extension supérieure 18 et une première extension inférieure 19 lesquelles s'étendent dans un plan perpendiculaire à la direction longitudinale (X) du véhicule. Tel que visible figures 4 et 6, ces extensions 18, 19 ferment les raidisseurs supérieurs 9, 10 et inférieurs 11, 12 respectivement. La coque extérieure 5, 6 de chaque sous-ensemble comprend une deuxième extension 20 supérieure et une deuxième extension inférieure 21, lesquelles s'étendent également dans un plan perpendiculaire à la direction longitudinale (X) du véhicule. Ces deuxièmes extensions 20, 21 sont superposées aux premières extensions 18, 19, tel que visible figures 4 et 6.

Dans l'exemple représenté, les parties superposées des premières extensions 18, 19 et des deuxièmes extensions 20, 21 s'étendent en dehors des raidisseurs 9-10, du côté des coques extérieures 5, 6, autrement dit, en dehors de l'élément structurel 2, facilitant ainsi leur accessibilité en vue de leur fixation aux traverses avant 3, 4.

L'assemblage des traverses avant 3, 4 à l'élément structurel 2 est réalisé ici par des moyens de fixation comprenant, pour chaque raidisseur 9-12 :
- deux orifices 22, 23 traversant les parties superposées des premières extensions 18, 19 et des deuxièmes extensions 20, 21 (figures 4, 6 et 7),
- deux vis de fixation 24, 25 enfilées dans ces orifices (figures 1, 6 et 7),
- deux écrous 26, 27 solidaires des deuxièmes extensions 20, 21 (figures 6 et 7).

Bien entendu, l'invention n'est pas limitée à un nombre de vis de fixation particulier pour fixer chaque raidisseur 9-12 à une traverse avant 3, 4. Une seule vis de fixation pourrait être prévue, ou plus de deux vis de fixation.

Les écrous 26, 27 peuvent être fixés aux deuxièmes extensions 20, 21 ou être intégrés à ces deuxièmes extensions 20, 21, par exemple au cours de leur fabrication.

Dans l'exemple représenté, ces écrous 26, 27 sont fixés à une plaque de fixation 28, elle-même solidaire d'une deuxième extension 20, 21. Cette plaque de fixation 28 présente l'avantage de renforcer les premières et deuxièmes extensions au niveau de leur zone de fixation à une traverse avant 3, 4.

Tel que représenté sur les figures 7 et 8a, b, c, une telle plaque de fixation 28 présente deux orifices 29, 30 recevant chacun un écrou 26, 27 respectivement. Un tel écrou 26, 27 peut par exemple être un écrou serti Rivkle®.

Les plaques de fixation 28 peuvent être métalliques, par exemple en aluminium ou acier, ou en matériau composite, par exemple du type déjà décrit. Elles peuvent être obtenues par moulage. Ces plaquettes de fixation 28 peuvent être collées sur les deuxièmes extensions 20, 21, sur leur face opposée aux premières extensions 18, 19, ou bien peuvent être insérées dans les moules de fabrication des coques, de manière à obtenir des plaques de fixation 28 intégrées aux coques.

Les traverses avant 3, 4 sont quant à elles percées de trous pour l'introduction et le vissage des vis de fixation 24, 25.

Dans le présent exemple, les traverses avant 3, 4 forment chacune un corps creux comprenant une face externe 3a, 4a et une face interne 3b, 4b, en appui contre les raidisseurs 9-12. Tel que visible plus particulièrement sur la figure 6 pour la traverse avant supérieure 3, la face externe 3a est percée d'orifices 31 pour le passage des vis de fixation 24, 25, la face interne 3b étant percée d'orifices 32 pour le passage et la fixation des vis 24, 25. Autrement dit, les vis de fixation 24, 25 assemblent la face interne 3b de la traverse avant 3 aux raidisseurs 9, 10 (voir figures 6 et 7). Il en est de même pour la traverse avant inférieure 4. L'assemblage de l'élément structurel 2 aux traverses avant 3, 4 est ainsi relativement simple. Après assemblage des coques constituants l'élément structurel 2 et mise en place si nécessaire des plaques de fixation 28 (une sur chaque superposition de première et deuxième extensions), chaque traverse avant 3, 4 peut être positionnée en regard de l'élément structurel 1, de sorte que les orifices 31, 32 de ses extrémités coïncident avec les orifices 22, 24 des sous-ensembles, les vis de fixation 24, 25 pouvant alors être vissées depuis l'extérieur de la traverse avant 3, 4.

Les sous-ensembles gauche 6, 8 et droit 5, 7 peuvent en outre supporter des équipements ou pièces additionnels. Par exemple les coques extérieures gauches 6 et droite 5 peuvent comporter des chapes de fixation de triangle inférieur de suspension (non représentés). Ceux-ci sont typiquement prévus dans les angles arrière de l'ensemble structurel 2 et en partie inférieure de celui-ci, où se rejoignent l'élément transversal arrière 16, 17 et les raidisseurs inférieurs 11, 12. Dans une variante, les chapes de fixation pourraient également être intégrées aux coques extérieures 5 et 6 en adaptant celles-ci selon des formes adéquates.

Bien entendu, l'invention n'est pas limitée aux modes ou variantes de réalisation et d'assemblage décrits précédemment et comprends tous les équivalents techniques de ces moyens.

En particulier, les modes de fixations peuvent être basés sur l'assemblage laser, ou l'induction, ou des fixations positives (systèmes vis-écrous, ou rivets ou équivalents).

Les coques peuvent également être assemblées en combinant plusieurs modes de fixation parmi ceux décrits ci-dessus, dans des mêmes zones ou dans des zones différenciées.

## Revendications

1. Partie avant (1) de la structure d'un véhicule automobile comprenant un ensemble structurel (2) et au moins une traverse avant (3, 4), l'ensemble structurel (2) comprenant au moins une coque extérieure (5, 6) et au moins une coque intérieure (7, 8) accolées l'une à l'autre, les coques (5-8) étant conformées pour définir, de chaque côté du véhicule, au moins un raidisseur (9-12) ayant la forme générale d'un manchon creux s'étendant sensiblement suivant la direction longitudinale (X) du véhicule, **caractérisé en ce que** chaque raidisseur (9-12) est fermé à une extrémité en appui contre la traverse avant (3, 4), par une première extension (18, 19) issue de l'une des deux coques le définissant, une deuxième extension (20, 21) issue de l'autre des deux coques le définissant étant superposée au moins en partie à la première extension (18, 19), lesdites extensions (18-21) comprenant des moyens de fixation (22-28) à ladite traverse avant (3, 4), **caractérisé en ce que** les parties superposées desdites première et deuxième extensions (18-21) s'étendent dans un plan sensiblement perpendiculaire ou perpendiculaire à la direction longitudinale (X) du véhicule et sont fixées à la traverse avant (3, 4) par des vis de fixation (24, 25) enfilées dans des orifices (22, 23) traversant les parties superposées des première (18, 19) et deuxième (20, 21) extensions.

2. Partie avant (1) de la structure d'un véhicule selon la revendication 1, **caractérisée en ce que** les parties superposées desdites première et deuxième extensions (18-21) s'étendent en dehors du raidisseur (9-12).

3. Partie avant (1) de la structure d'un véhicule selon l'une des revendications 1 ou 2, **caractérisée en ce que** les parties superposées desdites première et deuxième extensions (18-21) s'étendent en dehors du raidisseur (9-12), du côté de ladite au moins une coque extérieure (5, 6).

4. Partie avant (1) de la structure d'un véhicule selon l'une quelconque des revendications 1 à 3, **caractérisée en ce que** les moyens de fixation (22-28) comprennent au moins un orifice (22, 23) traversant les parties superposées desdites première et deuxième extensions (18-21), ledit orifice (22, 23) recevant une vis de fixation (24, 25) en prise avec un écrou (26, 27) solidaire de l'extension (20, 21) la plus éloignée de ladite traverse (3, 4).

5. Partie avant (1) selon la revendication 4, **caractérisée en ce que** l'écrou (26, 27) est fixé ou intégré à une plaque de fixation (28) solidaire de l'extension (20, 21) la plus éloignée de ladite traverse (3, 4).

6. Partie avant (1) selon la revendication 4 ou 5, **caractérisée en ce que** la plaque de fixation (28) est intégrée à l'extension (20, 21) la plus éloignée de ladite traverse (3, 4).

7. Partie avant (1) selon l'une quelconque des revendications 4 à 6, **caractérisée en ce que** ladite traverse (3, 4) forme un corps creux comprenant une face externe (3a, 4a) et une face interne (3b, 4b) en appui contre les raidisseurs (9-12) et **en ce que** ladite vis de fixation (24, 25) solidarise ladite face interne (3b, 4b) auxdites parties superposées des première et deuxième extensions (18-21), ladite face externe (3a, 4a) de la traverse comportant un orifice (31) pour le passage et le vissage de ladite vis de fixation (24, 25).

8. Partie avant (1) de la structure d'un véhicule selon l'une quelconque des revendications 1 à 7, **caractérisée en ce que** l'ensemble structurel (2) est réalisé en matériau composite, à base d'une matrice en résine thermodurcissable ou thermoplastique et d'un renfort en fibres de verre ou de carbone.

9. Partie avant (1) de la structure d'un véhicule selon l'une quelconque des revendications 1 à 8, **caractérisée en ce que** l'ensemble structurel (2) comprend d'une part deux coques extérieures gauche (6) et droite (5), et d'autre part deux coques intérieures gauche (8) et droite (7), les coques étant assemblées deux par deux à gauche et à droite pour former un sous-ensemble de coques extérieure et intérieur gauche (6, 8) et un sous-ensemble de coques extérieure et intérieure droit (5, 7).

## Patentansprüche

1. Vorderer Abschnitt (1) der Struktur eines Kraftfahrzeugs, umfassend eine strukturelle Anordnung (2) und mindestens eine vordere Traverse (3, 4), die strukturelle Anordnung (2) umfassend mindestens eine Außenschale (5, 6) und mindestens eine Innenschale (7, 8), die aneinandergefügt sind, wobei die Schalen (5 bis 8) ausgebildet sind, auf jeder Seite des Fahrzeugs mindestens eine Versteifung (9 bis 12) zu definieren, die die allgemeine Form einer hohlen Hülse aufweist, die sich im Wesentlichen entlang der Längsrichtung (X) des Fahrzeugs erstreckt, **dadurch gekennzeichnet, dass** jede Versteifung (9 bis 12) an einem Ende in Anlage gegen die vordere Traverse (3, 4) durch eine erste Erweiterung (18, 19) aus einer der zwei Schalen, die sie definieren, verschlossen ist, wobei eine zweite Erweiterung (20, 21) aus der anderen der zwei Schalen, die sie definieren, zumindest teilweise über der ersten Erweiterung (18, 19) angeordnet ist, wobei die Erweiterungen (18 bis 21) Mittel zur Befestigung (22 bis 28) an der vorderen Traverse (3, 4) umfassen, **dadurch gekennzeichnet, dass** die übereinander angeordneten Abschnitte der ersten und der zweiten Erweiterung (18 bis 21) sich in einer Ebene erstrecken, die im Wesentlichen senkrecht oder senkrecht zu der Längsrichtung (X) des Fahrzeugs verläuft, und an der vorderen Traverse (3, 4) durch Befestigungsschrauben (24, 25) befestigt sind, die in Öffnungen (22, 23) eingesteckt sind, die die übereinander angeordneten Abschnitte der ersten (18, 19) und der zweiten (20, 21) Erweiterung durchqueren.

2. Vorderer Abschnitt (1) der Struktur eines Fahrzeugs nach Anspruch 1, **dadurch gekennzeichnet, dass** sich die übereinander angeordneten Abschnitte der ersten und der zweiten Erweiterung (18 bis 21) außerhalb der Versteifung (9 bis 12) erstrecken.

3. Vorderer Abschnitt (1) der Struktur eines Fahrzeugs nach einem der Ansprüche 1 oder 2, **dadurch gekennzeichnet, dass** sich die übereinander angeordneten Abschnitte der ersten und der zweiten Erweiterung (18 bis 21) außerhalb der Versteifung (9 bis 12) auf der Seite der mindestens einen äußeren Schale (5, 6) erstrecken.

4. Vorderer Abschnitt (1) der Struktur eines Fahrzeugs nach einem der Ansprüche 1 bis 3, **dadurch gekennzeichnet, dass** die Mittel zur Befestigung (22 bis 28) mindestens eine Öffnung (22, 23) umfassen, die die übereinander angeordneten Abschnitte der ersten und der zweiten Erweiterung (18 bis 21) durchqueren, wobei die Öffnung (22, 23) eine Befestigungsschraube (24, 25) in Eingriff mit einer Mutter (26, 27) aufnimmt, die mit der Erweiterung (20, 21) fest verbunden ist, die am weitesten von der Traverse (3, 4) entfernt ist.

5. Vorderer Abschnitt (1) nach Anspruch 4, **dadurch gekennzeichnet, dass** die Mutter (26, 27) an einer Befestigungsplatte (28) befestigt oder darin aufgenommen ist, die mit der Erweiterung (20, 21) fest verbunden ist, die am weitesten von der Traverse (3, 4) entfernt ist.

6. Vorderer Abschnitt (1) nach Anspruch 4 oder 5, **dadurch gekennzeichnet, dass** die Befestigungsplatte (28) in der Erweiterung (20, 21) aufgenommen ist, die am weitesten von der Traverse (3, 4) entfernt ist.

7. Vorderer Abschnitt (1) nach einem der Ansprüche 4 bis 6, **dadurch gekennzeichnet, dass** die Traverse (3, 4) einen Hohlkörper bildet, der eine Außenseite (3a, 4a) und eine Innenseite (3b, 4b) in Anlage gegen die Versteifungen (9 bis 12) umfasst, und dadurch, dass die Befestigungsschraube (24, 25) die Innenseite (3b, 4b) fest mit den übereinander angeordneten Abschnitten der ersten und der zweiten Erweiterung (18 bis 21) verbindet, wobei die Außenseite (3a, 4a) der Traverse eine Öffnung (31) für den Durchgang und die Verschraubung der Befestigungsschraube (24, 25) aufweist.

8. Vorderer Abschnitt (1) der Struktur eines Fahrzeugs nach einem der Ansprüche 1 bis 7, **dadurch gekennzeichnet, dass** die strukturelle Anordnung (2) aus Verbundmaterial auf Basis einer Matrix aus wärmehärtbarem oder thermoplastischem Harz und einer Glasfaser- oder Karbonverstärkung gebildet ist.

9. Vorderer Abschnitt (1) der Struktur eines Fahrzeugs nach einem der Ansprüche 1 bis 8, **dadurch gekennzeichnet, dass** die strukturelle Anordnung (2) einerseits zwei äußere Schalen links (6) und rechts (5) und andererseits zwei innere Schalen links (8) und rechts (7) umfasst, wobei die Schalen paarweise links und rechts zusammengesetzt sind, um eine Untergruppe aus linken Außen- und Innenschalen (6, 8) und eine Untergruppe aus rechten Außen- und Innenschalen (5, 7) zu bilden.

## Claims

1. Front portion (1) of the structure of a motor vehicle comprising a structural assembly (2) and at least one front crossmember (3, 4), the structural assembly (2) comprising at least one outer shell (5, 6) and at least one inner shell (7, 8) contiguous to each other, the shells (5-8) being shaped so as to define on each side of the vehicle at least one stiffener (9-12) having the general shape of a hollow sleeve extending substantially in the longitudinal direction (X) of the vehicle, **characterized in that** each stiffener (9-12) is closed at an end resting against the front crossmember (3, 4) by a first extension (18, 19) extending from one of the two shells defining it, a second extension (20, 21) extending from the other of the two shells defining it being superposed at least partially on the first extension (18, 19), said extensions (18-21) comprising means (22-28) for fixing to said front crossmember (3, 4), **characterized in that** the superposed parts of said first and second extensions (18-21) extend in a plane perpendicular or substantially perpendicular to the longitudinal direction (X) of the vehicle, and are fixed to the front crossmember (3, 4) by fixing bolts (24, 25) fitted into orifices (22, 23) passing through the superposed parts of the first (18, 19) and second (20, 21) extensions.

2. Front portion (1) of the structure of a vehicle according to Claim 1, **characterized in that** the superposed parts of said first and second extensions (18-21) extend outside the stiffener (9-12).

3. Front portion (1) of the structure of a vehicle according to either of Claims 1 and 2, **characterized in that** the superposed parts of said first and second extensions (18-21) extend outside the stiffener (9-12) on the side of said at least one outer shell (5, 6).

4. Front portion (1) of the structure of a vehicle according to any of Claims 1 to 3, **characterized in that** the fixing means (22-28) comprise at least one orifice (22, 23) passing through the superposed parts of said first and second extensions (18-21), said orifice (22, 23) receiving a fixing bolt (24, 25) engaging with a nut (26, 27) secured to the extension (20, 21) which is furthest away from said crossmember (3, 4).

5. Front portion (1) according to Claim 4, **characterized in that** the nut (26, 27) is fixed to or integral with a fixing plate (28) secured to the extension (20, 21) which is furthest away from said crossmember (3, 4).

6. Front portion (1) according to Claim 4 or 5, **characterized in that** the fixing plate (28) is integral with the extension (20, 21) which is furthest away from said crossmember (3, 4).

7. Front portion (1) according to any of Claims 4 to 6, **characterized in that** said crossmember (3, 4) forms a hollow body comprising an outer face (3a, 4a) and an inner face (3b, 4b) resting against the stiffeners (9-12), and **in that** said fixing bolt (24, 25) secures said inner face (3b, 4b) to said superposed parts of the first and second extensions (18, 21), said outer face (3a, 4a) of the crossmember comprising an orifice (31) for the passage and tightening of said fixing bolt (24, 25).

8. Front portion (1) of the structure of a vehicle according to any of Claims 1 to 7, **characterized in that** the structural assembly (2) is made of composite material based on a matrix of thermohardening or thermoplastic resin, and a reinforcement of glass or carbon fibers.

9. Front portion (1) of the structure of a vehicle according to any of Claims 1 to 8, **characterized in that** the structural assembly (2) comprises firstly a left (6) and a right (5) outer shell, and secondly a left (8) and a right (7) inner shell, the shells being joined in pairs on the left and right to form a left subassembly of an outer shell and inner shell (6, 8) and a right subassembly of an outer shell and inner shell (5, 7).
